# EUROPÄISCHE PATENTSCHRIFT

(11) **EP 1 941 135 B1**
(45) Veröffentlichungstag und Bekanntmachung des Hinweises auf die Patenterteilung: **10.06.2009**
(21) Anmeldenummer: 06791865.6
(22) Anmeldetag: 06.09.2006
(51) Int. Cl.: F01N 3/20, F01N 3/36, B01D 53/94

(54) **EINSPRITZDÜSE MIT HEIZELEMENT UND WÄRMESPEICHER SOWIE VERFAHREN ZUM EINBRINGEN EINES OXIDIERBAREN FLUIDS IN EINE ABGASANLAGE STROMAUFWÄRTS EINES KATALYSATORS ODER FILTERS**
INJECTION NOZZLE HAVING HEATING ELEMENT AND HEAT ACCUMULATOR, AND METHOD FOR INTRODUCING AN OXIDIZABLE FLUID INTO AN EXHAUST SYSTEM UPSTREAM OF A CATALYTIC CONVERTER OR FILTER
BUSE A INJECTION COMPRENANT UN ELEMENT DE CHAUFFAGE ET RESERVOIR DE CHALEUR ET PROCEDE POUR INTRODUIRE UN FLUIDE POUVANT ETRE OXYDE DANS UNE INSTALLATION D'ECHAPPEMENT EN AMONT D'UN CATALYSEUR OU D'UN FILTRE

(30) Priorität: 20.09.2005 DE 102005044780
(43) Veröffentlichungstag der Anmeldung: 09.07.2008
(73) Patentinhaber: EMCON Technologies Germany (Augsburg) GmbH, 86154 Augsburg (DE)
(72) Erfinder: RANALLI, Marco, 86199 Augsburg (DE); BREMSER, Kathrin, 86899 Landsberg (DE)
(74) Vertreter: Prinz & Partner
(86) Internationale Anmeldenummer: PCT/EP2006/008678
(87) Internationale Veröffentlichungsnummer: WO 2007/033766

(56) Entgegenhaltungen:
- EP-A- 1 369 557
- WO-A-03/026777
- DE-A1- 4 436 415
- JP-A- 7 269 329

## Beschreibung

Die Erfindung betrifft eine Einspritzdüse mit einem Gehäuse und einem Heizelement, die insbesondere zur Einbringung eines oxidierbaren Fluids in eine Abgasanlage stromaufwärts eines Katalysators oder Filters verwendet werden kann. Die Erfindung betrifft auch ein Verfahren zum Einbringen eines oxidierbaren Fluids in eine Abgasanlage stromaufwärts eines Katalysators oder Filters.

Moderne Abgasanlagen enthalten häufig Dieselpartikelfilter oder NOx-Speicherkatalysatoren. Diese Filter oder Katalysatoren müssen in regelmäßigen Abständen regeneriert werden, da ansonsten ihr Strömungswiderstand übermäßig stark ansteigt bzw. ihre Wirksamkeit nachläßt. Die Regeneration kann allgemein als "Freibrennen" bezeichnet werden, da bei der Regeneration eine thermische Reaktion stattfindet. Diese Reaktion kann dadurch ausgelöst werden, daß das Kraftstoff-Luftgemisch, das dem Verbrennungsmotor zugeführt wird, angefettet wird. Alternativ kann Kraftstoff oder ein anderes geeignetes, oxidierbares Fluid unmittelbar in die Abgasanlage stromaufwärts des Filters oder des Katalysators eingebracht werden. Aus dem Stand der Technik sind verschiedene Systeme bekannt, um den Kraftstoff oder auch Harnstoff in das Abgasrohr einzuspritzen.

Wird der Kraftstoff unmittelbar eingespritzt, verdampft er im Abgasrohr. Dies führt allerdings dazu, daß dem Abgasstrom Wärme entzogen wird, was wiederum nachteilig für die Regeneration ist; für die Regeneration wird ja eine erhöhte Abgastemperatur angestrebt. Alternativ könnte eine Glühkerze verwendet werden, die den in die Abgasanlage einzuspritzenden Kraftstoff außerhalb der Abgasanlage verdampft. Jedoch hat sich herausgestellt, daß die Leistungsaufnahme einer hierfür ausreichend leistungsfähigen Glühkerze zu einer unzulässig hohen Beanspruchung des Bordnetzes des Kraftfahrzeugs führen würde.

Eine Einspritzdüse der eingangs genannten Art ist aus der DE 44 36 415 A1 bekannt.

Die Aufgabe der Erfindung besteht somit darin, eine Einspritzdüse bzw. ein Verfahren zum Einspritzen zu schaffen, mit der bzw. mit dem die notwendige Menge an Kraftstoff oder einem geeigneten anderen Fluid in die Abgasanlage eingebracht werden kann, ohne daß die Abgastemperatur in unerwünschter Weise absinkt und ohne daß das Bordnetz des Kraftfahrzeugs übermäßig belastet wird.

Zur Lösung dieser Aufgabe ist erfindungsgemäß bei einer Einspritzdüse der eingangs genannten Art vorgesehen, dass in dem Gehäuse ein Wärmespeicher aufgenommen ist, der von dem Heizelement aufgeheizt werden und die gespeicherte Wärme an das Fluid abgeben kann. Erfindungsgemäß ist auch ein Verfahren zum Einbringen eines oxidierbaren Fluids in eine Abgasanlage stromaufwärts eines Katalysators oder Filters vorgesehen, wobei eine Einspritzdüse verwendet wird, die ein Heizelement und einen Wärmespeicher aufweist, wobei das Heizelement vor dem Einspritzvorgang eingeschaltet wird, so daß sich der Wärmespeicher aufheizt, und das Fluid erst später eingespritzt wird, so daß der Wärmespeicher Energie an das Fluid abgeben und dieses verdampfen kann. Die Erfindung beruht auf dem Grundgedanken, ein Heizelement mit einer vergleichsweise geringen Leistungsaufnahme zu verwenden. Die Leistungsaufnahme ist so gering, daß das Heizelement das einzubringende Fluid in der kurzen Zeit des eigentlichen Einspritzvorganges nicht verdampfen kann. Statt dessen wird das Heizelement im wesentlichen dazu verwendet, den Wärmespeicher aufzuheizen, so daß nach einer gewissen "Vorheizzeit" eine genügend große Wärmemenge gespeichert ist, mit der während des vergleichsweise kurzen Einspritzvorganges das gesamte Fluid verdampft wird.

Als Heizelement kann eine an sich bekannte Glühkerze verwendet werden. Eine Leistungsaufnahme in der Größenordnung von 200 W dürfte ausreichend sein.

Für den Wärmespeicher kann als Material Metall verwendet werden. Neben einem guten Wärmespeicherungsvermögen ist eine besonders hohe Wärmeleitfähigkeit wichtig, damit die gespeicherte Wärme in sehr kurzer Zeit an das einzuspritzende Fluid abgegeben werden kann.

Vorzugsweise ist zwischen dem Heizelement und dem Wärmespeicher ein Spalt vorgesehen, durch den das Fluid strömen kann. Dies gewährleistet, daß während des eigentlichen Einspritzvorgangs auch das Heizelement von Fluid umströmt wird, welches unmittelbar verdampft werden kann.

Vorzugsweise ist zwischen dem Gehäuse und dem Wärmespeicher ein Isolationsmaterial angeordnet ist. Das Isolationsmaterial verhindert Wärmeverluste nach außen.

Es kann vorgesehen sein, daß das Heizelement eine vorbestimmte Zeit vor dem Einspritzvorgang eingeschaltet wird, während des Einspritzens eingeschaltet bleibt und mit Beendigung des Einspritzvorgangs ausgeschaltet wird. Rechtzeitig vor dem nächsten Einspritzvorgang wird das Heizelement wieder eingeschaltet.

Es dürfte ausreichend sein, das Heizelement etwa 20 Sekunden vor dem eigentlichen Einspritzvorgang einzuschalten. Diese Zeitdauer hängt im wesentlichen von der Heizleistung des Heizelementes ab. Je geringer die Heizleistung ist, desto früher muß das Heizelement eingeschaltet werden. Der eigentliche Einspritzvorgang dauert in der Größenordnung von zwei bis drei Sekunden.

Alternativ kann vorgesehen sein, daß das Heizelement kontinuierlich eingeschaltet bleibt. Die Heizleistung des Heizelementes wird dann so gering gewählt, daß das Heizelement den Wärmespeicher in der Zeit zwischen zwei Einspritzvorgängen wieder auf die zum Verdampfen des Fluids notwendige Temperatur aufheizen kann.

Zwischen zwei aufeinanderfolgenden Einspritzvorgängen liegt meist ein Zeitraum von zwei bis vier Minuten.

Die Erfindung wird nachfolgend anhand einer Ausführungsform beschrieben, die in den beigefügten Zeichnungen dargestellt ist. In diesen zeigen:
- Figur 1 eine schematische Ansicht eines erfindungsgemäßen Systems;
- Figur 2 einen Längsschnitt durch eine erfindungsgemäße Einspritzdüse;
- Figur 3 einen Querschnitt durch die Einspritzdüse von Figur 2 entlang der Ebene III-III; und
- Figur 4 ein Diagramm, in welchem die Heizleistung P des Heizelementes, die Temperatur T des Wärmespeichers sowie das eingespritzte Volumen V über der Zeit aufgetragen sind.

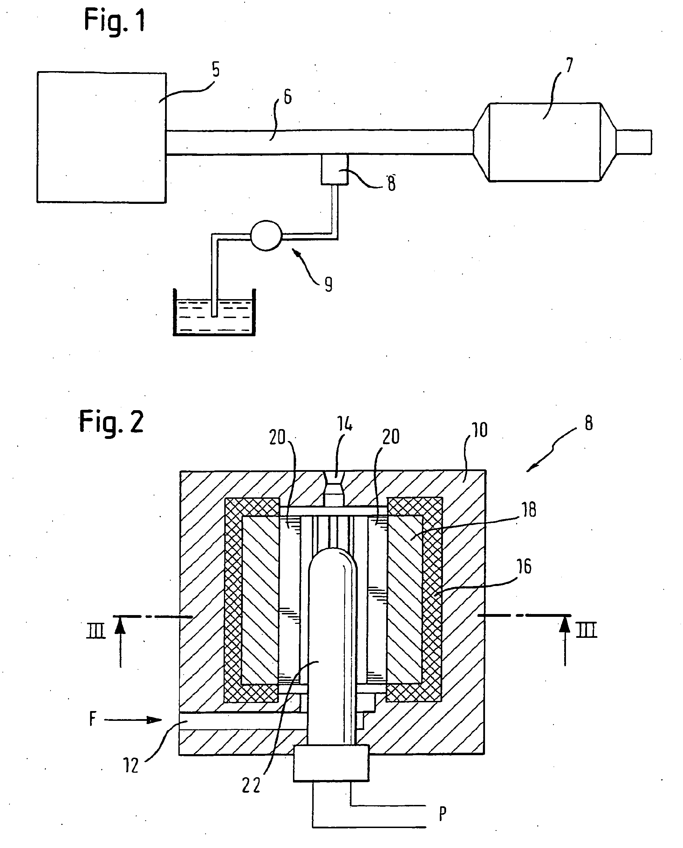

In Figur 1 ist schematisch eine Verbrennungskraftmaschine 5, insbesondere ein Dieselmotor, gezeigt, dessen Abgase über eine Abgasleitung 6 zu einem Katalysator, insbesondere NOx-Speicherkatalysator, oder einem Dieselpartikelfilter geleitet wird. Dieses Bauteil, welches den Anteil an Schadstoffen im Abgas verringert, ist hier allgemein mit dem Bezugszeichen 7 bezeichnet. An der Abgasleitung 6 ist eine Einspritzdüse 8 angebracht, die über ein Leitungs-/Pumpensystem 9 mit einem oxidierbaren Fluid, insbesondere Kraftstoff, aus einem geeigneten Vorratsbehälter versorgt werden kann. Ein solches System ist in seinen Grundzügen aus dem Stand der Technik bekannt. Es dient allgemein dazu, daß oxidierbare Fluid stromaufwärts des Bauteils 7 in den Abgasstrom einzubringen, um die Regeneration des Bauteils 7 einzuleiten.

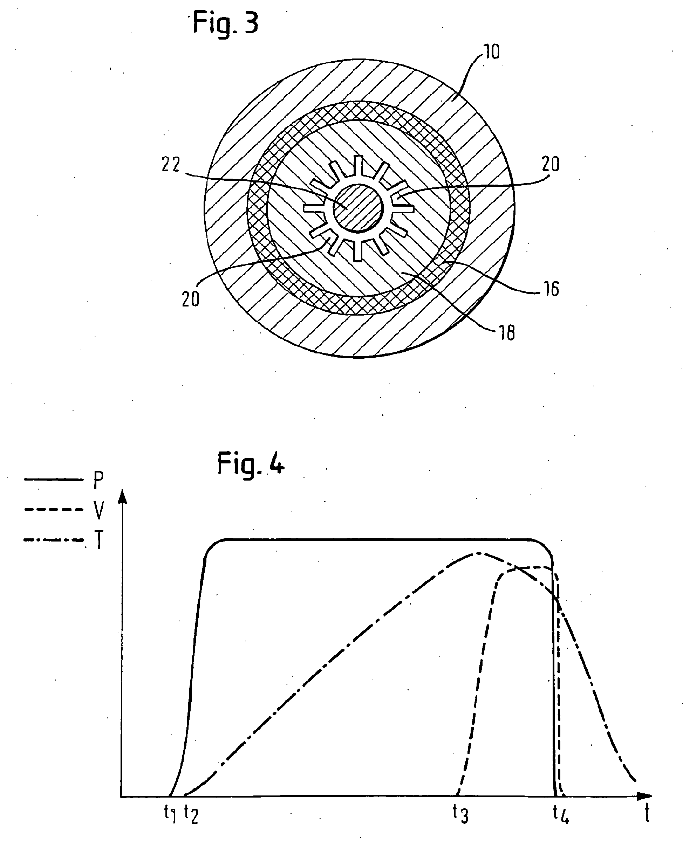

Die Einspritzdüse 8 (siehe die Figuren 2 und 3) weist ein Gehäuse 10 auf, in welchem ein Eingang 12 für das oxidierbare Fluid und ein Ausgang 14 für das verdampfte Fluid zur Abgasanlage hin vorgesehen sind. Im Inneren des Gehäuses 10 ist ein Isolationsmaterial 16 angeordnet, welches eine geringe Wärmeleitfähigkeit aufweist. Innerhalb des Isolationsmaterials 16 ist ein Wärmespeicher 18 angeordnet, der aus einem Material mit einer hohen Wärmekapazität und einer hohen Wärmeleitfähigkeit gebildet ist. Als Material kommen die meisten Metalle in Frage. Der Wärmespeicher 18 ist allgemein ringförmig ausgebildet und weist zu einer Mittelöffnung hin mehrere Rippen 20 auf. Die Rippen enden in geringem Abstand zu einem mittig angeordneten Heizelement 22, das mit elektrischer Energie P versorgt werden kann. Als Heizelement kann eine Glühkerze verwendet werden. Aufgrund des engen Spaltes zwischen dem Heizelement 22 und dem Wärmespeicher 18 mit den Rippen 20 steht eine vergleichsweise große Fläche zur Wärmeübertragung vom Heizelement 22 und dem Wärmespeicher 18 zum Fluid zur Verfügung.

In Figur 4 ist erläutert, wie das Fluid mittels der beschriebenen Einspritzdüse 8 in die Abgasleitung 6 eingebracht werden kann. Der Buchstabe P steht dabei für die dem Heizelement 22 zugeführte Energie, der Buchstabe V steht für das durch die Einspritzdüse 8 eingespritzte Volumen des Fluids, und der Buchstabe T steht für die Temperatur des Wärmespeichers 18.

Zum Zeitpunkt t₁ wird das Heizelement 22 eingeschaltet. Kurz darauf beginnt zum Zeitpunkt t₂ die Temperatur des Wärmespeichers 18 zu steigen. Mit einer Verzögerung in der Größenordnung von 20 bis 30 Sekunden beginnt zum Zeitpunkt t₃ der Einspritzvorgang. Sobald das oxidierbare Fluid F durch den Spalt zwischen dem Wärmespeicher 18 und dem Heizelement 22 gepumpt wird, verdampft das Fluid, da der Wärmespeicher 18 und das Heizelement 22 Energie an das Fluid abgeben. Dabei sinkt die Temperatur des Wärmespeichers 18. Der Einspritzvorgang dauert in der Größenordnung von zwei bis drei Sekunden und ist zum Zeitpunkt t₄ beendet. Zu diesem Zeitpunkt wird auch das Heizelement 22 ausgeschaltet.

Alternativ kann das Heizelement kurz vor dem Zeitpunkt t₄ ausgeschaltet und die Restwärme genutzt werden.

Die Heizleistung des Heizelementes 22, die Zeitspanne zwischen dem Einschalten des Heizelementes 22 und den Beginn des Einspritzens (t₃-t₁) sowie die Wärmekapazität in des Wärmespeichers 18 sind so bemessen, daß die gesamte Menge an einzuspritzendem Fluid während des Einspritzvorganges verdampft wird.

Auf diese Weise ist gewährleistet, daß dem Abgasstrom keine Wärme zum Verdampfen des Fluids entzogen werden muß.

Gemäß einer alternativen Ausführungsform kann vorgesehen sein, daß das Heizelement kontinuierlich eingeschaltet bleibt. In diesem Fall ist eine sehr viel geringe Heizleistung erforderlich, da zwischen zwei Einspritzzyklen sehr viel mehr Zeit zum Aufheizen des Wärmespeichers 18 zur Verfügung steht.

### Bezugszeichenliste

- 5: Verbrennungskraftmaschine
- 6: Abgasleitung
- 7: Bauteil zur Abgasreinigung
- 8: Einspritzdüse
- 9: Leitungs/Pumpensystem
- 10: Gehäuse
- 12: Fluideintritt
- 14: Fluidaustritt
- 16: Isolationsmaterial
- 18: Wärmespeicher
- 20: Rippe
- 22: Heizelement

## Patentansprüche

1. Einspritzdüse (8), insbesondere zur Einbringung eines oxidierbaren Fluids in eine Abgasanlage stromaufwärts eines Katalysators (7) oder Filters (7), mit einem Gehäuse (10) und einem Heizelement (22), **dadurch gekennzeichnet, dass** in dem Gehäuse (10) ein Wärmespeicher (18) aufgenommen ist, der von dem Heizelement (22) aufgeheizt werden und die gespeicherte Wärme an das Fluid abgeben kann.

2. Einspritzdüse nach Anspruch 1, **dadurch gekennzeichnet, daß** das Heizelement (22) eine Glühkerze ist.

3. Einspritzdüse nach Anspruch 1 oder Anspruch 2, **dadurch gekennzeichnet, daß** der Wärmespeicher (18) aus Metall besteht.

4. Einspritzdüse nach einem der vorhergehenden Ansprüche, **dadurch gekennzeichnet, daß** das Heizelement (22) innerhalb des Wärmespeichers (18) angeordnet ist.

5. Einspritzdüse nach einem der vorhergehenden Ansprüche, **dadurch gekennzeichnet, daß** zwischen dem Heizelement (12) und dem Wärmespeicher (18) ein Spalt vorgesehen ist, durch den das Fluid strömen kann.

6. Einspritzdüse nach Anspruch 5, **dadurch gekennzeichnet, daß** der Wärmespeicher (18) mehrere Rippen (20) aufweist, die dem Heizelement (22) zugewandt sind.

7. Einspritzdüse nach einem der vorhergehenden Ansprüche, **dadurch gekennzeichnet, daß** zwischen dem Gehäuse und dem Wärmespeicher (18) ein Isolationsmaterial (16) angeordnet ist.

8. Verfahren zum Einbringen eines oxidierbaren Fluids in eine Abgasanlage stromaufwärts eines Katalysators (7) oder Filters (7), wobei eine Einspritzdüse (8) verwendet wird, die ein Heizelement (22) und einen Wärmespeicher (18) aufweist, wobei das Heizelement (22) vor einem Einspritzvorgang eingeschaltet wird, so daß sich der Wärmespeicher (18) aufheizt, und das Fluid erst später eingespritzt wird, so daß der Wärmespeicher (18) Energie an das Fluid abgeben und dieses verdampfen kann.

9. Verfahren nach Anspruch 8, **dadurch gekennzeichnet, daß** das Heizelement (22) eine vorbestimmte Zeit vor dem Einspritzvorgang eingeschaltet wird, während des Einspritzens eingeschaltet bleibt und mit Beendigung des Einspritzvorgangs ausgeschaltet wird.

10. Verfahren nach Anspruch 8, **dadurch gekennzeichnet, daß** das Heizelement (22) eine vorbestimmte Zeit vor dem Einspritzvorgang eingeschaltet wird, während des Einspritzens eingeschaltet bleibt und kurz vor Beendigung des Einspritzvorgangs ausgeschaltet wird.

11. Verfahren nach einem der Ansprüche 8 bis 10, **dadurch gekennzeichnet, daß** das Heizelement (22) in der Größenordnung von 20 Sekunden vor dem Einspritzvorgang eingeschaltet wird.

12. Verfahren nach Anspruch 8, **dadurch gekennzeichnet, daß** das Heizelement (22) kontinuierlich eingeschaltet bleibt.

13. Verfahren nach einem der Ansprüche 8 bis 12, **dadurch gekennzeichnet, daß** der Einspritzvorgang in der Größenordnung von zwei bis drei Sekunden dauert.

14. Verfahren nach einem der Ansprüche 8 bis 13, **dadurch gekennzeichnet, daß** der Einspritzvorgang nach einer vorbestimmten Zeit wiederholt wird, die in der Größenordnung von zwei bis vier Minuten beträgt.

## Claims

1. An injection nozzle (8), in particular for introducing an oxidizable fluid into an exhaust system upstream of a catalyst (7) or filter (7), comprising a housing (10) and a heating element (22), **characterized in that** accommodated in the housing (10) is a heat accumulator (18) which can be heated up by the heating element (22) and can dissipate the stored heat to the fluid.

2. The injection nozzle according to claim 1**, characterized in that** the heating element (22) is a glow plug.

3. The injection nozzle according to claim 1 or claim 2, **characterized in that** the heat accumulator (18) is made of metal.

4. The injection nozzle according to any of the preceding claims, **characterized in that** the heating element (22) is arranged inside the heat accumulator (18).

5. The injection nozzle according to any of the preceding claims, **characterized in that** between the heating element (12) and the heat accumulator (18) a gap is provided, through which the fluid can flow.

6. The injection nozzle according to claim 5, **characterized in that** the heat accumulator (18) includes a plurality of ribs (20), which face the heating element (22).

7. The injection nozzle according to any of the preceding claims, **characterized in that** an insulating material (16) is arranged between the housing and the heat accumulator (18).

8. A method of introducing an oxidizable fluid into an exhaust system upstream of a catalyst (7) or filter (7), wherein an injection nozzle (8) is used which includes a heating element (22) and a heat accumulator (18), the heating element (22) being switched on before an injection process, so that the heat accumulator (18) is heated up, and the fluid being injected only later, so that the heat accumulator (18) can release energy to the fluid and evaporate the same.

9. The method according to claim 8, **characterized in that** the heating element (22) is switched on a predetermined time before the injection process, remains switched on during injection, and is switched off upon completion of the injection process.

10. The method according to claim 8, **characterized in that** the heating element (22) is switched on a predetermined time before the injection process, remains switched on during injection, and is switched off shortly before completion of the injection process.

11. The method according to any of claims 8 to 10, **characterized in that** the heating element (22) is switched on in the order of 20 seconds before the injection process.

12. The method according to claim 8, **characterized in that** the heating element (22) remains switched on continuously.

13. The method according to any of claims 8 to 12, **characterized in that** the injection process takes a time in the order of two to three seconds.

14. The method according to any of claims 8 to 13, **characterized in that** the injection process is repeated after a predetermined time, which is in the order of two to four minutes.

## Revendications

1. Injecteur (8), en particulier pour introduire un fluide oxydable dans une installation de gaz d'échappement en amont d'un catalyseur (7) ou d'un filtre (7), comportant un boîtier (10) et un élément de chauffage (22), **caractérisé en ce que** dans le boîtier (10) est reçu un accumulateur de chaleur (18) qui peut être chauffé par l'élément de chauffage (22) et qui peut délivrer la chaleur accumulée au fluide.

2. Injecteur selon la revendication 1, **caractérisé en ce que** l'élément de chauffage (22) est une bougie de préchauffage.

3. Injecteur selon la revendication 1 ou la revendication 2, **caractérisé en ce que** l'accumulateur de chaleur (18) est en métal.

4. Injecteur selon l'une des revendications précédentes, **caractérisé en ce que** l'élément de chauffage (22) est agencé à l'intérieur de l'accumulateur de chaleur (18).

5. Injecteur selon l'une des revendications précédentes, **caractérisé en ce qu'**entre l'élément de chauffage (12) et l'accumulateur de chaleur (18) est prévue une fente à travers laquelle le fluide peut s'écouler.

6. Injecteur selon la revendication 5, **caractérisé en ce que** l'accumulateur de chaleur (18) présente plusieurs ailettes (20) qui sont tournées vers l'élément de chauffage (22).

7. Injecteur selon l'une des revendications précédentes, **caractérisé en ce qu'**un matériau isolant (16) est agencé entre le boîtier et l'accumulateur de chaleur (18).

8. Procédé d'introduction d'un fluide oxydable dans une installation de gaz d'échappement d'un catalyseur (7) ou d'un filtre (7), dans lequel on utilise un injecteur (8) qui présente un élément de chauffage (22) et un accumulateur de chaleur (18), l'élément de chauffage (22) étant mis en marche avant une opération d'injection, de telle sorte que l'accumulateur de chaleur (18) se réchauffe, et le fluide est injecté seulement plus tard de telle sorte que l'accumulateur de chaleur (18) peut délivrer de l'énergie au fluide et que celui-ci peut s'évaporer.

9. Procédé selon la revendication 8, **caractérisé en ce que** l'élément de chauffage (22) est mis en marche à un moment prédéterminé avant l'opération d'injection, reste en marche pendant l'injection et est mis hors circuit lorsque l'opération d'injection est terminée.

10. Procédé selon la revendication 8, **caractérisé en ce que** l'élément de chauffage (22) est mis en marche à un moment prédéterminé avant l'opération d'injection, reste en marche pendant l'injection et est mis hors circuit peu avant que l'opération d'injection soit terminée.

11. Procédé selon l'une des revendications 8 à 10, **caractérisé en ce que** l'élément de chauffage (22) est mis en marche dans l'ordre de grandeur de 20 secondes avant l'opération d'injection.

12. Procédé selon la revendication 8, **caractérisé en ce que** l'élément de chauffage (22) reste en marche en continu.

13. Procédé selon l'une des revendications 8 à 12**, caractérisé en ce que** l'opération d'injection dure de l'ordre de grandeur de deux à trois secondes.

14. Procédé selon l'une des revendications 8 à 13, **caractérisé en ce que** l'opération d'injection est répétée après un temps prédéterminé qui est de l'ordre de grandeur de deux à quatre minutes.
